# EUROPEAN PATENT APPLICATION

(11) **EP 4 556 377 A1**
(43) Date of publication of application: **21.05.2025**
(21) Application number: 23857318.2
(22) Date of filing: 21.08.2023
(51) Int. Cl.: B64F 5/40, B24C 1/00, B24C 3/06, B24C 3/32, B24C 5/02, B24C 9/00, B62B 3/00, B62B 5/00

(54) **AIRCRAFT COATING REMOVAL DEVICE AND METHOD**

(30) Priority: 26.08.2022 JP 2022135035
(71) Applicant: Mitsubishi Heavy Industries, Ltd., Tokyo 100-8332 (JP)
(72) Inventor: FUJITA, Jun, Tokyo 100-8332 (JP); YAMAJO, Masayuki, Tokyo 100-8332 (JP)
(74) Representative: Cabinet Beau de Loménie
(86) International application number: PCT/JP2023/029998
(87) International publication number: WO 2024/043207

(57) **Abstract**

Provided in an aircraft paint removing apparatus and method are: a movable traveling carrier; a blaster head mounted on the traveling carrier and configured to spray blasting material; a lifting unit configured to move the blaster head in a vertical direction; and a moving unit configured to move the blaster head in a horizontal direction.

## Description

### Field

The present disclosure relates to an aircraft paint removing apparatus and method for peeling off and removing paint from a surface of an aircraft.

### Background

An aircraft has left and right main wings, left and right horizontal stabilizers, and a vertical stabilizer that are provided to a fuselage. The outer surface of the aircraft becomes dirty after a long use. With a dirty outer surface, the fuel efficiency of the aircraft deteriorates. Therefore, it is necessary to carry out cleaning for removing substances attached to the surface. One example of such an aircraft paint removing apparatus is disclosed in Patent Literature 1.

### Citation List

### Patent Literature

Patent Literature 1: Japanese Unexamined Utility Model Registration Application Publication No. S64-17896

### Summary

### Technical Problem

An aircraft also has a painted surface. The surface of the aircraft needs to be repainted, as necessary. Before repainting the surface, the paint is peeled off and removed from the surface of the aircraft. Conventionally, a chemical or a machining tool such as a grinder has been used to peel off the paint from the surface. However, such a paint removing operation is a burdensome labor for workers, and therefore, there is a demand for improved workability.

The present disclosure is to address the challenge described above, and an object of the present disclosure is to provide an aircraft paint removing apparatus and method for simplifying the paint removing operation, and improving the efficiency of the operation.

### Solution to Problem

In order to achieve the above object, an aircraft paint removing apparatus according to the present disclosure includes: a movable traveling carrier; a blaster head mounted on the traveling carrier and configured to spray blasting material; a lifting unit configured to move the blaster head in a vertical direction; and a moving unit configured to move the blaster head in a horizontal direction.

Further, an aircraft paint removing method according to the present disclosure includes the steps of: moving a blaster head closer to a fuselage of an aircraft by moving a traveling carrier, and spraying blasting material onto an upper surface of a horizontal wing of the aircraft; performing an operation of moving the blaster head closer to the fuselage of the aircraft and an operation of moving the blaster head in a horizontal direction, alternatingly; and moving the blaster head in the vertical direction depending on a height of the upper surface of the horizontal wing.

### Advantageous Effects of Invention

With the aircraft paint removing apparatus and method according to the present disclosure, it is possible to simplify the paint removing operation, as well as to improve the efficiency of the operation.

### Brief Description of Drawings

FIG. 1 is a schematic perspective view of an aircraft.
FIG. 2 is a front view of the aircraft.
FIG. 3 is a front view of an aircraft paint removing apparatus according to a present embodiment.
FIG. 4 is a plan view of the aircraft paint removing apparatus.
FIG. 5 is a sectional side view of the aircraft paint removing apparatus, across V-V in FIG. 3.
FIG. 6 is a perspective view of a blaster head supported by a swinging unit.
FIG. 7 is a schematic diagram illustrating a configuration of a blaster unit.
FIG. 8 is a plan view illustrating an operation of the aircraft paint removing apparatus.

### Description of Embodiments

A preferred embodiment of the present disclosure will now be explained in detail, with reference to drawings. This embodiment is, however, not intended to limit the scope of the present disclosure, and when there are a plurality of embodiments, any combinations of such embodiments also fall within the scope of the present disclosure. Elements described in the embodiment include those that can be easily thought of by a person skilled in the art, those that are substantially identical, and those falling within what is called the scope of equivalence.

### <Aircraft>

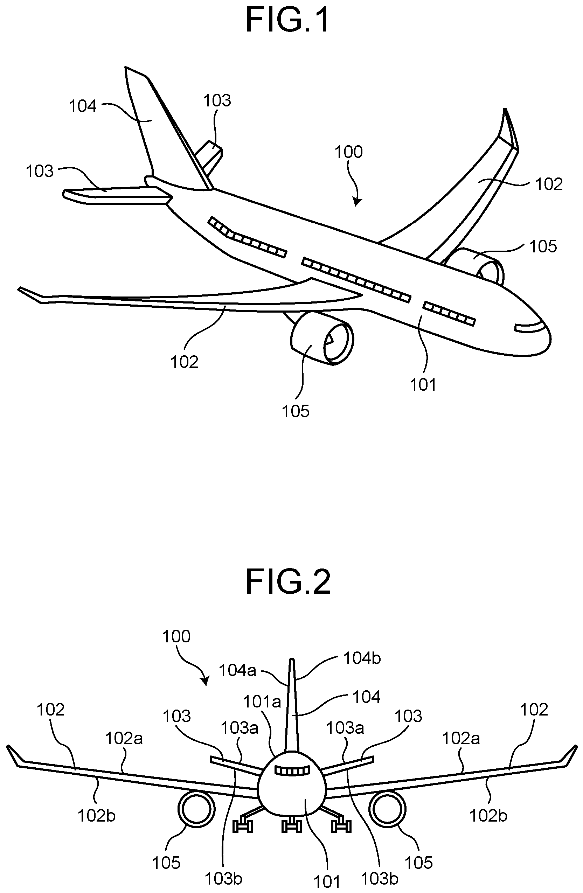

FIG. 1 is a schematic perspective view of an aircraft.

As illustrated in FIG. 1, an aircraft 100 has a pair of left and right main wings 102 on the front side with respect to a fuselage 101, and a pair of left and right horizontal stabilizers 103 as well as a vertical stabilizer 104 on the rear side. The aircraft 100 has aircraft engines 105 beneath the respective main wings 102.

FIG. 2 is a front view of the aircraft.

As illustrated in FIG. 2, an aircraft paint removing apparatus according to a present embodiment is configured to remove the paint on an upper surface 101a of the fuselage 101 of the aircraft 100, upper surfaces 102a of the pair of left and right main wings 102, upper surfaces 103a of the pair of left and right horizontal stabilizers 103, and left and right side surfaces 104a, 104b of the vertical stabilizer 104. The aircraft paint removing apparatus according to the present embodiment may also be configured to remove the paint on bottom surfaces 102b of the pair of left and right main wings 102, and bottom surfaces 103b of the pair of left and right horizontal stabilizers 103, as necessary.

### <Aircraft Paint Removing Apparatus>

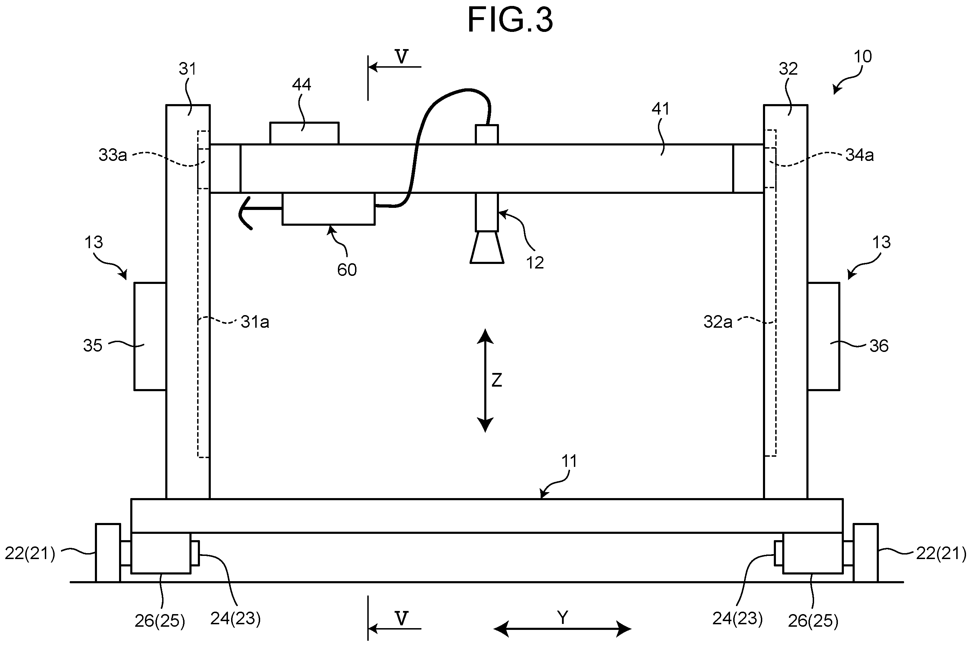

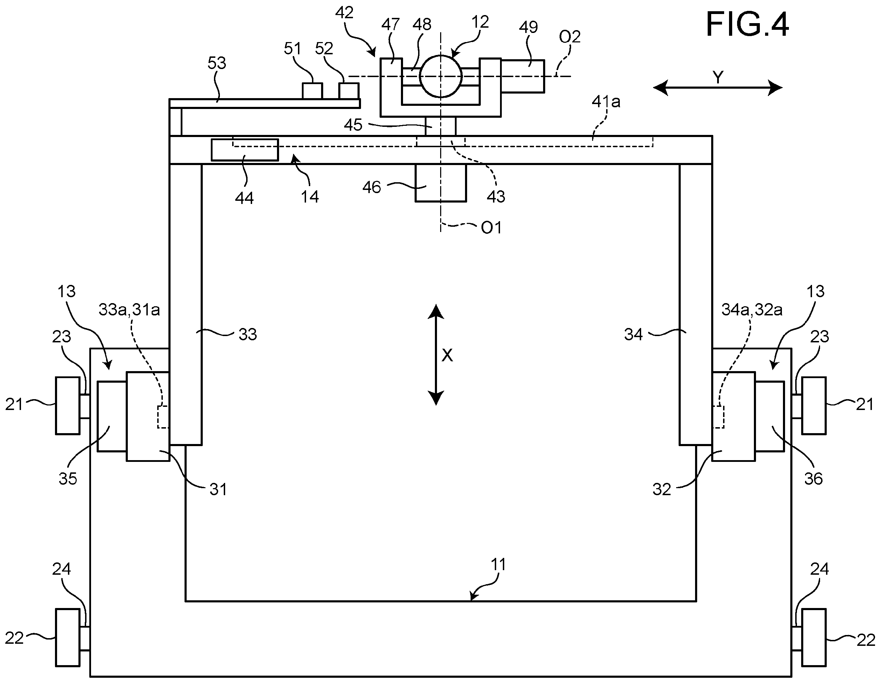

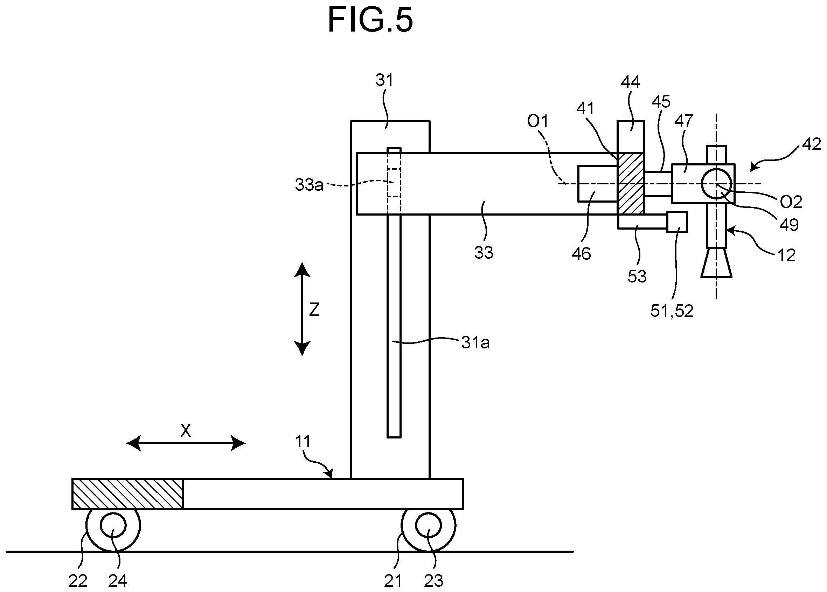

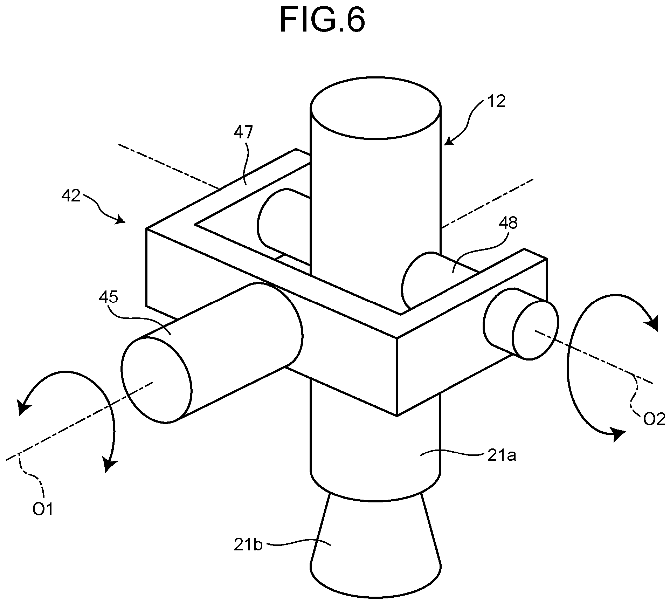

FIG. 3 is a front view of the aircraft paint removing apparatus according to the present embodiment. FIG. 4 is a plan view of the aircraft paint removing apparatus. FIG. 5 is a sectional side view of the aircraft paint removing apparatus across V-V in FIG. 3. FIG. 6 is a perspective view of a blaster head supported by a swinging unit. In the description hereunder, the horizontal direction extending along a rotational axis of the blaster head will be referred to as a Y direction; the horizontal direction orthogonal to the Y direction will be referred to as an X direction; the vertical direction orthogonal to the X direction and the Y direction will be referred to as a Z direction.

As illustrated in FIGS. 3 to 5, a paint removing apparatus 10 includes a traveling carrier 11, a blaster head 12, a lifting unit 13, and a moving unit 14.

The traveling carrier 11 is movable and has a plate-like shape extending along the horizontal direction. The traveling carrier 11 has a U-shape in a plan view (see FIG. 4). The shape of the traveling carrier 11 is, however, not limited to such a shape, and may have an H-shape in a plan view, for example. The traveling carrier 11 has a plurality of (four, in this embodiment) traveling wheels 21, 22 attached thereto. The number of traveling wheels 21, 22 is, however, not limited to four, and is only required to be any number equal to or more than three, and there may be one traveling wheel 22, for example. The pair of traveling wheels 21 are disposed along one side of the traveling carrier 11 in the X direction, on the respective sides in the Y direction. The traveling carrier 11 supports the pair of traveling wheels 21 rotatably about an axle 23 that extends along the Y direction. The pair of traveling wheels 22 are disposed along the other side in the X direction, on the respective sides of the traveling carrier 11 in the Y direction. The traveling carrier 11 supports the pair of traveling wheels 22 rotatably about an axle 24 that extends along the Y direction.

The four traveling wheels 21, 22 can be driven in rotation and steered. The traveling carrier 11 supports the axle 23 of the pair of traveling wheels 21, with a driving steering unit 25 disposed between the axle 23 and the traveling carrier 11. The driving steering unit 25 can drive the pair of traveling wheels 21 in rotation, and steer the pair of traveling wheels 21. The traveling carrier 11 supports the axle 24 of the pair of traveling wheels 22, with a driving steering unit 26 disposed between the axle 23 and the traveling carrier 11. The driving steering unit 26 can drive the pair of traveling wheels 22 in rotation, and steer the pair of traveling wheels 21.

The traveling carrier 11 may be capable of being driven and operated by a worker who is seated on a driver's seat, not illustrated, and operating a steering wheel, and an accelerator pedal or brake pedal, or may be capable of being remotely driven and operated without any worker being seated thereon, for example.

The blaster head 12 is mounted on the traveling carrier 11. To explain further, the blaster head 12 is supported on the moving unit 14, and the moving unit 14 is supported on the lifting unit 13. The lifting unit 13 is then supported on the traveling carrier 11. The lifting unit 13 can move the blaster head 12 in the vertical direction (Z direction). The moving unit 14 can move the blaster head 12 in the horizontal direction (Y direction).

To explain more in detail, in the traveling carrier 11, a pair of support members 31, 32 are installed upright along one side in the X direction on the respective sides in the Y direction, in a manner spaced apart from each other in the Y direction. The support members 31, 32 have the same prism-like shape elongated in the Z direction. A pair of support arms 33, 34 are then disposed along the X direction, in a manner spaced apart from each other in the Y direction. The one support arm 33 has one end, in the longitudinal direction (X direction), supported on the support member 31, in a manner movable in the vertical direction. The other support arm 34 has one end, in the longitudinal direction (X direction), supported on the support member 32, in a manner movable in the vertical direction.

To explain further, the support members 31, 32 have respective guiding grooves 31a, 32a extending along the Z direction, on their respective surfaces facing each other. The support arms 33, 34 are provided with respective guide members 33a, 34a, on their respective surfaces not facing each other, and the guiding grooves 31a, 32a, which are provided to the respective support members 31, 32, support the respective guide members 33a, 34a, in a movable manner. The lifting unit 13 includes a first driving unit 35 configured to move the support arm 33 along the guiding groove 31a of the support member 31 by moving the guide member 33a, and a second driving unit 36 configured to move the support arm 34 along the guiding groove 32a of the support member 32 by moving the guide member 34a. Each of the first driving unit 35 and the second driving unit 36 is a driving motor that is provided to one of the support members 31, 32 and the support arms 33, 34 corresponding thereto, for example. The other one of the support members 31, 32 and the support arms 33, 34 corresponding thereto is provided with a rack that is to be meshed with a pinion gear to be rotated by the driving motor. As a result, the first driving unit 35 and the second driving unit 36 can raise or lower the support arms 33, 34 with respect to the support members 31, 32, respectively.

In the present embodiment, a first lifting unit includes the guiding groove 31a, the guide member 33a, and the first driving unit 35, and a second lifting unit includes the guiding groove 32a, the guide member 34a, and the second driving unit 36. The first driving unit 35 and the second driving unit 36 are, however, not limited to the configurations described above, and ball-screw mechanisms or fluid cylinder mechanisms may also be used, for example.

The pair of support arms 33, 34 are in parallel with each other, and are positioned spaced apart from each other in the Y direction. A support frame 41 is coupled to the other ends of the pair of respective support arms 33, 34 in the longitudinal direction (X direction). The support frame 41 is disposed along the horizontal direction (Y direction) that is orthogonal to the support arms 33, 34, and the ends of the support frame 41 in the longitudinal direction (in the Y direction) are coupled to the respective other ends of the support arms 33, 34. The blaster head 12 is supported on the support frame 41, in a manner movable in the horizontal direction (Y direction). By driving the first driving unit 35 and the second driving unit 36 to cause the pair of the support arms 33, 34 to move in the vertical direction (Z direction), respectively, the lifting unit 13 can move the blaster head 12 in the vertical direction (Z direction).

The blaster head 12 is supported movably on the support frame 41, with a swinging unit 42 therebetween. The swinging unit 42 can move the blaster head 12 in the vertical direction (Z direction) and the horizontal direction (Y direction). The moving unit 14 can move the blaster head 12, together with the swinging unit 42, in the horizontal direction (Y direction) with respect to the support frame. To explain further, the support frame 41 has a guiding groove 41a extending along the Y direction, on the front side thereof (the upper side in FIG. 4). The guiding groove 41a provided to the support frame 41 movably supports a movable body 43. The moving unit 14 includes a driving unit 44 for moving the movable body 43 along the guiding groove 41a provided to the support frame 41. The driving unit 44 is a driving motor provided to one of the support frame 41 and the movable body 43, for example, and the other one of the support frame 41 and the movable body 43 is provided with a rack that is to be meshed with a pinion gear to be rotated by the driving motor. As a result, the driving unit 44 can move the movable body 43 in the horizontal direction, along the support frame 41.

In the present embodiment, the moving unit 14 includes the guiding groove 41a, the movable body 43, and the driving unit 44. Note that the driving unit 44 is not limited to the configuration described above, and a ball-screw mechanism or a fluid cylinder mechanism may also be used, for example.

The swinging unit 42 is provided to the movable body 43, and can swing the blaster head 12 along the vertical direction (Z direction) and the horizontal direction (Y direction). As illustrated in FIGS. 4 and 6, the movable body 43 rotatably support a first rotation shaft 45 extending along the X direction. The first rotation shaft 45 is rotatable about a first shaft axis O1 that is in parallel with the X direction. The movable body 43 is provided with a first driving unit 46, and the first driving unit 46 is enabled to rotate the first rotation shaft 45. The first rotation shaft 45 has a tip portion coupled to a coupling bracket 47 having a U-shape. The coupling bracket 47 rotatably supports a second rotation shaft 48 extending along a direction orthogonal to the X direction (the Y direction in FIG. 4). The second rotation shaft 48 is rotatable about a second shaft axis O2 that is orthogonal to the X direction. The coupling bracket 47 is provided with a second driving unit 49, and the second driving unit 49 is enabled to rotate the second rotation shaft 48.

The blaster head 12 is mounted on the second rotation shaft 48. The blaster head 12 is mounted on the second rotation shaft 48, in a manner extending along a direction orthogonal to the second rotation shaft 48. The blaster head 12 is thus configured swingable about the first shaft axis O1 by causing the first driving unit 46 to rotate the first rotation shaft 45. The blaster head 12 is also swingable about the second shaft axis O2 by causing the second driving unit 49 to rotate the second rotation shaft 48.

In the present embodiment, the swinging unit 42 is implemented as what is called a gimbal mechanism, but the configuration is not limited thereto. For example, the swinging unit 42 may be configured as a spherical bearing.

The paint removing apparatus 10 is provided with a measurement unit 51 and a camera (image capturing device) 52. A bracket 53 is provided to the other end of the support frame 41, and the measurement unit 51 and the camera 52 are mounted on the bracket 53. The measurement unit 51 measures the distance between the blaster head 12 and the outer surface of the aircraft 100. The measurement unit 51 outputs the measurement result to a control unit (not illustrated). The control unit controls to drive the traveling carrier 11, the lifting unit 13, the moving unit 14, and the swinging unit 42 so as to keep the distance between the blaster head 12 and the outer surface of the aircraft 100 to a preset distance, on the basis of the measurement result of the measurement unit 51. The camera 52 captures an image of the outer surface of the aircraft 100 after the paint is removed. The camera 52 outputs the resultant captured image to the control unit. The control unit can store the image captured by the camera 52 in a storage unit (not illustrated), and display the image on a display unit (not illustrated). A worker can check the condition of the outer surface of the aircraft 100 with the paint removed, by checking the image captured by the camera 52, on the display unit.

### <Blaster Unit>

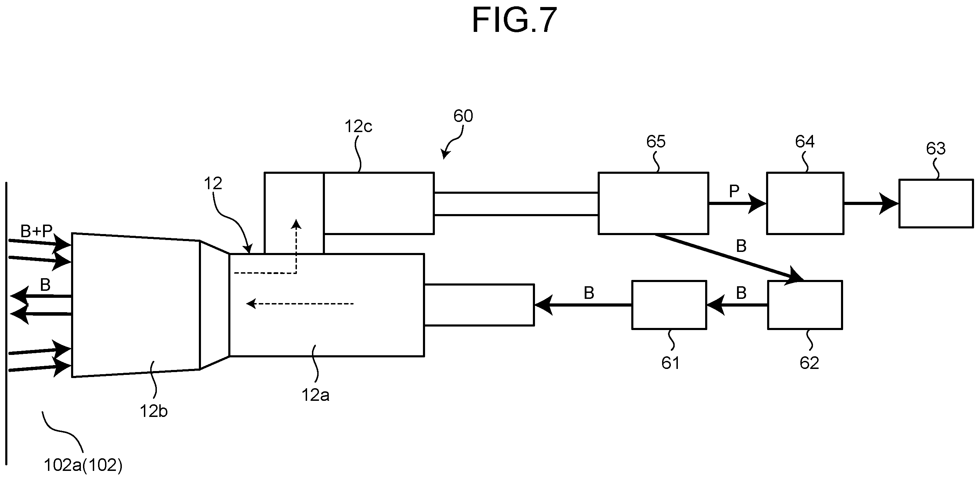

FIG. 7 is a schematic diagram illustrating a configuration of a blaster unit.

As illustrated in FIG. 7, a blaster unit 60 includes the blaster head 12, a compressed-air feeder (feeder) 61, a blast tank 62, an air discharger unit (collecting unit) 63, and an air discharger filter 64, and a separator unit 65. Preferably, the blaster head 12, the blast tank 62, the air discharger filter 64, and the separator unit 65 included in the blaster unit 60 are provided to the support frame 41.

The blaster head 12 has a head body 12a, a tubular brush 12b, and a branched portion 12c. The head body 12a of the blaster head 12 is coupled to the blast tank 62, and the blast tank 62 is coupled to the compressed-air feeder 61. Therefore, when the compressed-air feeder 61 feeds compressed air, the blasting material B in the blast tank 62 is supplied into the head body 12a, and the blasting material B is sprayed out of the tubular brush 12b onto the upper surface 102a of the main wing 102 of the aircraft 100, for example. The blasting material B collides with the upper surface 102a of the main wing 102, and removes the paint on the upper surface 102a by polishing.

In the blaster head 12, the branched portion 12c is coupled to the separator unit 65, the separator unit 65 is coupled to the air discharger filter 64 and the blast tank 62, and the air discharger filter 64 is then coupled to the air discharger unit 63. When the air discharger unit 63 exerts suctioning force, the suctioning force acts on the blaster head 12, through the air discharger filter 64 and the separator unit 65. The blaster head 12 then collects the blasting material B collided with the upper surface 102a of the main wing 102 and the paint material P removed from the main wing 102 through the tubular brush 12b, and the blasting material B and the paint material P are passed through the branched portion 12c, into the separator unit 65. The separator unit 65 is a cyclone separator, for example, and separates the blasting material B from the paint material P, and collects the blasting material B into the blast tank 62. By contrast, the paint material P is collected by the air discharger filter 64.

The body of the aircraft 100 is made of duralumin, which is an aluminum alloy, for example. As an example of the paint for the body surface of the aircraft 100, a top coat of urethane paint or fluorine paint is applied to the surface of an epoxy paint primer, for example.

As the blasting material B, alumina particles, iron particles, or dry ice are used, for example.

### <Aircraft Paint Removing Method>

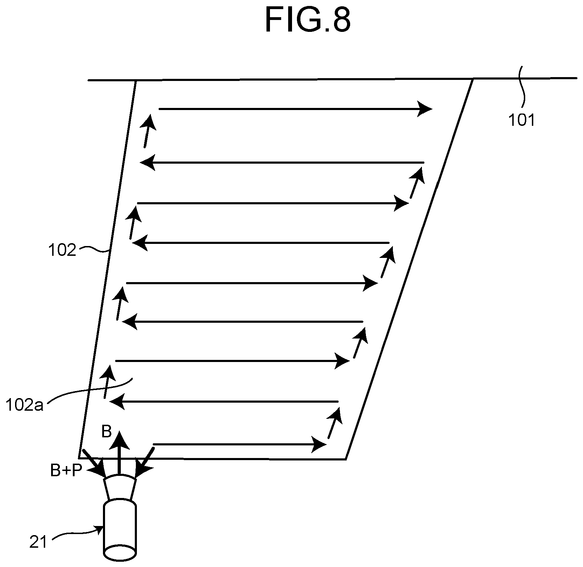

FIG. 8 is a plan view illustrating an operation of the aircraft paint removing apparatus.

An aircraft paint removing method according to the present embodiment includes: a step of moving the blaster head 12 closer to the fuselage 101 of the aircraft 100 by moving the traveling carrier 11, and spraying the blasting material onto the upper surface 102a, 103a of the main wing 102 or the horizontal stabilizer 103 that is a horizontal wing of the aircraft 100; a step of performing an operation of moving the blaster head 12 closer to the fuselage 101 of the aircraft 100 and an operation of moving the blaster head 12 in the horizontal direction (X direction), alternatingly; and a step of moving the blaster head 12 in the vertical direction depending on the height of the upper surface 102a, 103a of the main wing 102 or the horizontal stabilizer 103.

An operation for removing the paint across a range from the upper surface 102a of one of the main wings 102 toward the fuselage 101 of the aircraft 100 continuously, using the paint removing apparatus 10, will now be explained. As illustrated in FIG. 3, the paint removing apparatus 10 causes the lifting unit 13 to raise the blaster head 12, and causes the traveling carrier 11 to move and to stop the blaster head 12 at a paint removal start position. The paint removal start position is a position where the blaster head 12 is positioned above the upper surface 102a of the tip of the main wing 102.

At the paint removal start position, the lifting unit 13 lowers the blaster head 12, and the moving unit 14 adjusts the position of the blaster head 12 to a position facing the upper surface 102a of the rear end of the main wing 102. At this time, the tip of the blaster head 12 is brought into contact with the upper surface 102a of the main wing 102. In other words, the tip portion of the tubular brush 12b, provided to the head body 12a of the blaster head 12, is brought into contact with the upper surface 102a of the main wing 102.

In this state, the blasting material B is sprayed out of the blaster head 12, as illustrated in FIG. 8. By then causing the moving unit 14 to move the blaster head 12 from the rear end toward the front end of the main wing 102, the paint is removed from the upper surface 102a along the tip portion of the main wing 102. At this time, the blaster unit 60 collects the blasting material B and the paint material P. By then causing the traveling carrier 11 to move the blaster head 12 toward the fuselage 101, the paint is removed from the upper surface 102a along the front end of the main wing 102. By then causing the moving unit 14 to move the blaster head 12 from the front end toward the rear end of the main wing 102, the paint is removed from the upper surface 102a along a part adjacent to the tip portion of the main wing 102. By moving the blaster head 12 along a zig-zag trajectory in the width-direction with respect to the upper surface 102a of the main wing 102, the paint is removed from the upper surface 102a across the range from the tip portion toward the base end.

When the blaster head 12 is moved in a manner facing the upper surface 102a of the main wing 102, the control unit adjusts the height of the blaster head 12, by controlling the first driving unit 35 and the second driving unit 36 on the basis of the measurement result from the measurement unit 51.

When the blaster head 12 is moved in a manner facing the upper surface 102a of the main wing 102, the control unit also adjusts the angle of the blaster head 12, on the basis of the angle of the upper surface 102a of the main wing 102, by causing the swinging unit 42 to operate and to swing the blaster head 12, as required.

### [Actions and Effects of Present Embodiment]

An aircraft paint removing apparatus according to a first aspect includes: the traveling carrier 11 enabled to move; the blaster head 12 mounted on the traveling carrier 11 and enabled to spray blasting material; the lifting unit 13 enabled to move the blaster head 12 in a vertical direction; and the moving unit 14 enabled to move the blaster head 12 in a horizontal direction.

With the aircraft paint removing apparatus according to the first aspect, by causing the lifting unit 13 to raise or to lower the blaster head 12, and by causing the moving unit 14 to move the blaster head 12 horizontally, on the basis of the height or the position of the surface of the aircraft 100, the blaster head 12 can be adjusted so as to face the surface of the aircraft 100. Therefore, by moving the blaster head 12 while spraying the blasting material B, with the blaster head 12 facing the surface of the aircraft 100, the paint on the surface of the aircraft 100 can be removed properly. As a result, it is not only possible to simplify the paint removing operation but also to improve the efficiency of the operation.

An aircraft paint removing apparatus according to a second aspect is the aircraft paint removing apparatus according to the first aspect, in which the traveling carrier 11 includes the pair of support members 31, 32 that are installed upright along the vertical direction, the pair of support members 31, 32 support one ends in a longitudinal direction of the pair of respective support arms 33, 34 disposed along the horizontal direction in a manner movable in the vertical direction, and other ends in the longitudinal direction of the respective support arms 33, 34 are coupled to the support frame 41 disposed along the horizontal direction that is orthogonal to the support arms 33, 34; and the blaster head 12 is supported on the support frame 41 in a manner movable in the horizontal direction. With this, by supporting the blaster head 12 on the support arms 33, 34 horizontally extending from the respective support members 31, 32 provided to the traveling carrier 11, it is possible to prevent the traveling carrier 11 from coming into contact with the aircraft 100 while the paint on the aircraft 100 is being removed by the blaster head 12.

An aircraft paint removing apparatus according to a third aspect is the aircraft paint removing apparatus according to the second aspect, in which the lifting unit 13 is enabled to move the blaster head 12 in the vertical direction by moving the support arms 33, 34 in the vertical direction, and the moving unit 14 is enabled to move the blaster head 12 in the horizontal direction with respect to the support frame 41. With this, the distance between the blaster head 12 and the surface of the aircraft 100 can be adjusted by moving the blaster head 12 in the vertical direction, and the paint removing operation can be performed continuously by moving the blaster head 12 in the horizontal direction.

An aircraft paint removing apparatus according to a fourth aspect is the aircraft paint removing apparatus according to any one of the first to the third aspects, further including the swinging unit 42 enabled to swing the blaster head 12 in the vertical direction and the horizontal direction. With this, the angle of the blaster head 12 can be adjusted appropriately, with respect to the angle of the surface of the aircraft 100.

An aircraft paint removing apparatus according to a fifth aspect is the aircraft paint removing apparatus according to any one of the second to the fourth aspects, further including: the compressed-air feeder 61 configured to feed the blasting material into the blaster head 12; the air discharger unit (collecting unit) 63 configured to collect the blasting material B sprayed from the blaster head 12 and paint material P; and the separator unit 65 configured to separate the blasting material B and the paint material P thus collected. With this, it is possible not only to use the blasting material B efficiently, but also to suppress scattering of the paint material P.

An aircraft paint removing apparatus according to a sixth aspect is the aircraft paint removing apparatus according to any one of the first to the fifth aspects, in which the traveling carrier 11 includes at least the three traveling wheels 21, 22 that are steerable. With this, it is possible to move the blaster head 12 suitably to the shape of the main wing 102, and to adjust the position of the blaster head 12 to a proper position with respect to the main wing 102, for example.

An aircraft paint removing apparatus according to a seventh aspect is the aircraft paint removing apparatus according to any one of the first to the sixth aspects, further including the measurement unit 51 configured to measure a distance between an outer surface of the aircraft 100 and the blaster head 12. With this, it is possible to adjust the height or the angle of the blaster head 12 on the basis of the measurement result of the measurement unit 51, and to maintain a proper distance between the blaster head 12 and the outer surface of the aircraft 100.

An aircraft paint removing apparatus according to an eighth aspect is the aircraft paint removing apparatus according to any one of the first to the seventh aspects, further including the camera (image capturing device) 52 configured to capture an image of the outer surface of the aircraft 100 with the paint removed. With this, by displaying an image of the outer surface of the aircraft 100, the image being captured by the camera 54, on a display unit, a worker can check the condition of how the paint has been removed from the outer surface of the aircraft 100.

An aircraft paint removing method according to a ninth aspect includes: a step of moving the blaster head 12 closer to the fuselage 101 of the aircraft 100 by moving the traveling carrier 11, and spraying blasting material onto the upper surface 102a, 103a of the main wing 102 or the horizontal stabilizer 103 that is a horizontal wing of the aircraft 100; a step of performing an operation of moving the blaster head 12 closer to the fuselage 101 of the aircraft 100 and an operation of moving the blaster head 12 in a horizontal direction, alternatingly; and a step of moving the blaster head 12 in the vertical direction depending on a height of the upper surface 102a, 103a of the main wing 102 or the horizontal stabilizer 103. With this, it is possible to remove the paint properly from the upper surfaces 102a, 103a of the main wings 102 or the horizontal stabilizers 103 that are horizontal wings. As a result, it is not only possible to simplify the paint removing operation but also to improve the efficiency of the operation.

An aircraft paint removing method according to a tenth aspect is the aircraft paint removing method according to the ninth aspect, in which, when the blaster head 12 reaches the fuselage 101, the blaster head 12 is moved along the upper surface 101a of the fuselage 101. With this, it is possible to remove the paint on the upper surface 102a of the main wing 102 and the paint on the upper surface 101a of the fuselage 101 continuously.

An aircraft paint removing method according to an eleventh aspect is the aircraft cleaning method according to the ninth or the tenth aspect, in which the blaster head 12 is moved along a side surface of the vertical stabilizer 104 of the aircraft 100. With this, it is possible to remove the paint on the side surfaces of the vertical stabilizer 104, as well as the paint on the main wings 102 and the fuselage 101.

Note that used in the embodiment described above is a double-side support structure in which the ends of the support frame 41 are supported by the pair of the respective support arms 33, 34, respectively, but it is also possible to use a cantilever structure in which only one end or a middle part of the support frame is supported by a support arm.

### Reference Signs List

10 Paint removing apparatus
11 Traveling carrier
12 Blaster head
13 Lifting unit
14 Moving unit
21, 22 Traveling wheels
23, 24 Axle
25, 26 Driving steering unit
31, 32 Support member
33, 34 Support arm
35 First driving unit
36 Second driving unit
41 Support frame
42 Swinging unit
43 Movable body
44 Driving unit
45 First rotation shaft
46 First driving unit
47 Coupling bracket
48 Second rotation shaft
49 Second driving unit
51 Measurement unit
52 Camera (image capturing device)
53 Bracket
60 Blaster unit
61 Compressed-air feeder (feeder)
62 Blast tank
63 Air discharger unit (collecting unit)
64 Air discharger filter
65 Separator unit
100 Aircraft
101 Fuselage
101a Upper surface
102 Main wing
102a Upper surface
103 Horizontal stabilizer
104 Vertical stabilizer

## Claims

1. An aircraft paint removing apparatus comprising:
a movable traveling carrier;
a blaster head mounted on the traveling carrier and configured to spray blasting material;
a lifting unit configured to move the blaster head in a vertical direction; and
a moving unit configured to move the blaster head in a horizontal direction.

2. The aircraft paint removing apparatus according to claim 1, wherein
a support member is installed upright along the vertical direction on the traveling carrier,
a support arm is disposed along the horizontal direction and is supported by the support member so that one end in a longitudinal direction is movable in the vertical direction,
a support frame is disposed along the horizontal direction that is orthogonal to the support arm and is coupled to another end in the longitudinal direction of the support arm, and
the blaster head is supported on the support frame so that the blaster head is movable in a horizontal direction.

3. The aircraft paint removing apparatus according to claim 2, wherein
the lifting unit is configured to move the blaster head in the vertical direction by moving the support arm in the vertical direction, and
the moving unit is configured to move the blaster head in the horizontal direction with respect to the support frame.

4. The aircraft paint removing apparatus according to any one of claims 1 to 3, comprising a swinging unit configured to swing the blaster head in the vertical direction and the horizontal direction.

5. The aircraft paint removing apparatus according to claim 1, comprising:
a feeder configured to feed the blasting material into the blaster head;
a collecting unit configured to collect the blasting material sprayed from the blaster head and paint material; and
a separator unit configured to separate the collected blasting material and paint material.

6. The aircraft paint removing apparatus according to claim 1, wherein the traveling carrier includes at least three wheels that are steerable.

7. The aircraft paint removing apparatus according to claim 1, comprising a measurement unit configured to measure a distance between an outer surface of an aircraft and the blaster head.

8. The aircraft paint removing apparatus according to claim 1, comprising an image capturing device configured to capture an image of the outer surface of the aircraft with the paint removed.

9. An aircraft paint removing method comprising the steps of:
moving a blaster head closer to a fuselage of an aircraft by moving a traveling carrier, and spraying blasting material onto an upper surface of a horizontal wing of the aircraft;
performing an operation of moving the blaster head closer to the fuselage of the aircraft and an operation of moving the blaster head in a horizontal direction, alternatingly; and
moving the blaster head in the vertical direction depending on a height of the upper surface of the horizontal wing.

10. The aircraft paint removing method according to claim 9, wherein when the blaster head reaches the fuselage, the blaster head is moved along an upper surface of the fuselage.

11. The aircraft paint removing method according to claim 9 or 10, wherein the blaster head is moved along a side surface of a vertical stabilizer of the aircraft.
